Europäisches Patentamt

European Patent Office

Office européen des brevets

(11) Veröffentlichungsnummer: **0 017 955**
**B1**

(12) **EUROPÄISCHE PATENTSCHRIFT**

(45) Veröffentlichungstag der Patentschrift:
25.01.84

(51) Int. Cl.³: **E 04 B 2/74,** E 04 C 3/32,
E 04 B 5/14, E 04 B 1/38

(21) Anmeldenummer: **80102005.8**

(22) Anmeldetag: **14.04.80**

(54) **Verbindungsvorrichtung für Flächenkonstruktionselemente oder dgl.**

**Verbunden mit 80900661.2 (europäische Anmeldenummer) durch Entscheidung vom 05.01.82.**

(30) Priorität: **14.04.79 DE 2915276**
**05.11.79 DE 2944557**

(43) Veröffentlichungstag der Anmeldung:
**29.10.80 Patentblatt 80/22**

(45) Bekanntmachung des Hinweises auf die Patenterteilung:
**25.01.84 Patentblatt 84/4**

(84) Benannte Vertragsstaaten:
**AT BE CH FR GB IT LI LU NL SE**

(56) Entgegenhaltungen:
**DE - A - 2 535 388**
**DE - B - 2 854 083**
**FR - A - 2 313 518**
**US - A - 3 242 523**
**US - A - 3 691 709**

(73) Patentinhaber: **RUBINARA AG, -, CH-9451 Eichberg/SG (CH)**

(72) Erfinder: **Puschkarski, Felix, Max-Eyth-Strasse 32, D-7910 Neu-Ulm (DE)**
Erfinder: **Schnell, Raimund, Max-Eyth-Strasse 32, D-7910 Neu-Ulm (DE)**

(74) Vertreter: **Büchel, Kurt F., Dr., Austrasse 4, FL-9490 Vaduz (LI)**

Verbindungsvorrichtung für Flächenkonstruktionselemente oder dgl.

Die Erfindung betrifft eine Verbindungsvorrichtung für mit variablen Winkeln aneinander festlegbare Flächenkonstruktionselemente, insbesondere Wand- und/oder Deckenelemente, Zargen od.dgl., mit an den Stosskanten der Flächenkonstruktionselemente jeweils festlegbaren Profilschienen, die jeweils ein offenes, im Querschnitt bogenförmiges Profilstück aufweisen und hiermit in gegenseitigen Eingriff bringbar sind, wobei mehrere derart ineinander gesteckte Profilschienen durch stirnseitig einlegbare Bolzen fixierbar sind.

Eine Anordnung dieser Art ist aus der DE-A-2 535 388 bekannt geworden. Bei dieser bekannten Anordnung sollen die bogenförmigen Profilstücke jedoch die Form einer Spirale aufweisen. Da eine Spirale jedoch über ihrer gesamten Bogenlänge einen kontinuierlich sich ändernden Radius aufweist, liegen ineinandergreifende, um einen bestimmten Winkel gegeneinander versetzte Bogenstücke infolge jeweils unterschiedlicher Krümmungen am selben Ort nicht sauber aneinander an, sondern klaffen auseinander. Dies verursacht jedoch einen erheblichen Platzverlust, so dass jeweils nur wenige Bogenstücke ineinandergeschachtelt werden können.

Eine saubere gegenseitige Anlage und damit eine saubere Fixierung ist hierbei lediglich durch entsprechendes Verbiegen der ineinander eingreifenden Bogenstücke erreichbar. Die bekannte Anordnung benötigt daher ein eine radial nach aussen wirkende Kraft ausübendes Druckstück, um die ineinander eingreifenden Bogenstücke derart elastisch zu verformen. Hierzu sind bei der bekannten Anordnung die stirnseitig einzulegenden Bolzen als Gummistöpsel ausgebildet, die mit Hilfe einer Spannschraube in axialer Richtung zusammengepresst werden, womit eine radiale Aufweitung erreicht wird. Die dabei auftretenden radialen Sprengkräfte müssen durch den gegenseitigen Formschluss der aneinander festzulegenden Bogenstücke aufgenommen werden. Das führt einerseits zu verhältnismässig grossen Bogenlängen. Anderseits besteht aber auch die Gefahr, dass die radialen Sprengkräfte den Formschluss sprengen, so dass die Profilschienen auseinanderfallen.

Ein weiterer Nachteil ist darin zu sehen, dass bei angezogenem Stöpsel eine nachträgliche Winkeländerung nicht mehr möglich ist, was den Montageaufwand erhöhen kann. Sofern dennoch, etwa aus Versehen, ein Drehmoment aufgebracht wird, kann es infolge der durch den Stössel verhinderten Drehbewegung zu einer zangenartigen Kippbewegung der ineinandergesteckten Bogenstücke kommen, wodurch der Formschluss gesprengt werden kann und die Verbindung infolgedessen auseinanderfällt. Ausserdem ist davon auszugehen, dass die genannten Gummistöpsel lediglich eine lokal begrenzte gegenseitige Anlage bewirken. Die miteinander zusammenwirkenden Schienen besitzen somit lediglich im Bereich ihrer Enden den erwünschten gegenseitigen Anlagekontakt, was sich insbesondere bei Schienen mit verhältnismässig grosser Länge nachteilig auf die Stabilität und die Wackelsicherheit auswirken kann.

Ein weiterer Unsicherheitsfaktor besteht bei der bekannten Anordnung darin, dass die den jeweiligen Gummistöpsel in axialer Richtung zusammenpressende Schraube zur Vermeidung zu grosser radialer Sprengkräfte zu wenig angezogen wird. Die bekannte Anordnung erfordert demnach einen nicht unbeträchtlichen Montage- und Kontrollaufwand, wenn Montagefehler ausgeschlossen werden sollen. In dieser Hinsicht ist zudem zu berücksichtigen, dass Anordnungen gattungsgemässer Art insbesondere im Messe- und Ausstellungsbau Verwendung finden und somit in der Regel fachfremdem Personal ausgesetzt sind. Ein weiterer Nachteil der bekannten Anordnung zeigt sich beim Bau von Rasterdecken bzw. Wandungen od.dgl. mit mehreren nicht abgestützten Stossstellen. Hierbei ergeben sich im Untergurtbereich auf die gattungsgemässe Verbindung jeweils wirkende Zugkräfte, welche zu einer weiteren Verformung der Profilstücke und damit zu einem Durchhängen der Decken- bzw. Wandkonstruktionen führen können.

Hiervon ausgehend ist es daher die Aufgabe der vorliegenden Erfindung unter Vermeidung der Nachteile der bekannten Lösungen eine Anordnung gattungsgemässer Art so zu verbessern, dass eine schnell und einfach montierbare, scharnierartige Verbindung erstellbar ist, wobei viele Bogenstücke ineinandergeschachtelt werden können und die ineinander geschachtelten Bogenstücke einen sauberen gegenseitigen Anlagekontakt besitzen und wobei die Fixierbolzen gleichzeitig als einfache Steckelemente ausgebildet sein können, mit deren Hilfe in radialer Richtung wirkende Zug- und Druckkräfte aufgenommen werden können.

Die Lösung dieser Aufgabe gelingt gemäss der Erfindung in überraschend einfacher Weise dadurch, dass die bogenförmigen Profilstücke im Querschnitt sichelartig durch zwei gegeneinander versetzte Kreisbögen, die gleichen Radius aufweisen, begrenzt sind und dass die zur Fixierung jeweils vorgesehenen Bolzen drucksteif ausgebildet und an einem Ende mit einer die benachbarten Stirnseiten der ineinandergreifenden bogenförmigen Profilstücke übergreifenden Randklaue versehen sind.

Bei der vorstehend vorgeschlagenen Lösung der gestellten Aufgabe ist das bogenförmige Profilstück mondsichelartig ausgebildet, wobei diese Mondsichel etwa einen Winkel von 180° umschliesst. Beim Zusammenstecken von zwei oder mehreren Profilstücken dieser Art muss der stirnseitig eingesteckte Bolzen daher eine Randklaue aufweisen, damit er die zusammengesteckten Profilstücke zusammenhält und ein Auseinanderfallen der scharnierartigen Konstruktion verhindert.

Eine weitere vorteilhafte Lösung der gestellten Aufgabe besteht nun darin, dass die bogenförmigen Profilstücke ebenfalls im Querschnitt sichelartig durch zwei gegeneinander versetzte Kreisbögen, die gleichen Radius aufweisen, begrenzt sind und an wenigstens einem Ende durch einen dekorativen Bogenfortsatz verlängert sind, und dass die zur Fixierung jeweils vorgesehenen Bolzen drucksteif ausgebildet sind. Da das Profilstück durch den Bogenfortsatz verlängert ist und mithin einen grösseren Winkel als 180° umschliesst, wird bereits durch das Bogenstück selbst verhindert, dass ein von mehreren ineinandergeschachtelten Bogenstücken gebildetes Scharnier auseinanderfällt, so dass auf die Randklaue der drucksteifen Bolzen verzichtet werden kann.

Die beim Stand der Technik auftretenden Probleme treten hier in vorteilhafter Weise nicht mehr auf. Die erfindungsgemässen Massnahmen ergeben ersichtlich eine scharnierartige Verbindung, bei der eine nachträgliche Winkeländerung der ineinandergreifenden Profilschienen ohne weiteres möglich ist. Infolge des exakten Mondsichelquerschnitts der Anlagefläche der Bogenstücke können vergleichsweise viele Profilschienen ineinandergeschachtelt werden. Es bedarf auch keiner radialen Verspannung zur Erzielung einer sauberen Passform und eines ausreichenden Halts. Es ist also volle Drehbarkeit gewährleistet und die Verbindung kann auch nicht durch radial nach aussen wirkende Sprenkräfte auseinandergedrückt werden. Die hierbei verwendbaren drucksteifen Fixierbolzen stellen zudem verhältnismässig einfache und daher kostengünstige Bauteile dar, die leicht und einfach in Stellung bringbar sind, was die Montagearbeiten ausserordentlich erleichtern kann. Die Randklaue der für das erste Lösungsbeispiel verwendeten Fixierbolzen bildet praktisch eine die drehbar ineinander eingreifenden Bogenstücke umfassende Klammer, durch welche diese zuverlässig zusammengehalten und in Umfangsrichtung geführt werden, so dass es eines Formschlusses zwischen den ineinandergesteckten Bogenstücken nicht bedarf und es auch beim Auftreten von auf die Verbindung wirkenden Zugkräften bzw. bei Winkeländerungen nicht zu einem Auseinanderklaffen bzw. Aufspringen der Verbindung kommen kann. Anderseits bildet die genannte Randklaue auch eine Sicherung des zugehörigen Fixierbolzens selbst gegen seitliche Verschiebungen und damit gegen einen Durchtritt durch die Bogenöffnung, so dass man in vorteilhafter Weise bereits mit verhältnismässig kleinen Bogenwinkeln auskommt, was sich im Hinblick auf die erfindungsgemässe Kreisbogenausgestaltung der Bogenstücke vorteilhaft auswirkt.

Zweckmässige Ausgestaltungen und vorteilhafte Weiterbildungen der übergeordneten Massnahmen ergeben sich aus der nachstehenden Beschreibung eines bevorzugten Ausführungsbeispiels anhand der Zeichnung in Verbindung mit den Unteransprüchen.

In der Zeichnung zeigen:

Fig. 1 eine schematische Ansicht mehrerer aneinander festgelegter Flächenelemente einer Rasterdecke;

Fig. 2 eine erfindungsgemässe Profilschiene im Schnitt gemäss einem ersten bevorzugten Ausführungsbeispiel;

Fig. 3 eine erfindungsgemässe Profilschiene im Schnitt gemäss einem zweiten bevorzugten Ausführungsbeispiel in einem anderen Massstab;

Fig. 4 einen erfindungsgemässen Fixierbolzen mit Randklaue im Schnitt;

Fig. 5 den Fixierbolzen gemäss Fig. 4 in Montagestellung;

Fig. 6 einige Montagebeispiele mit mehreren ineinander eingreifenden Profilschienen in schematischer Darstellung; und

Fig. 7 ein weiteres bevorzugtes Ausführungsbeispiel des erfindungsgemässen Fixierbolzens.

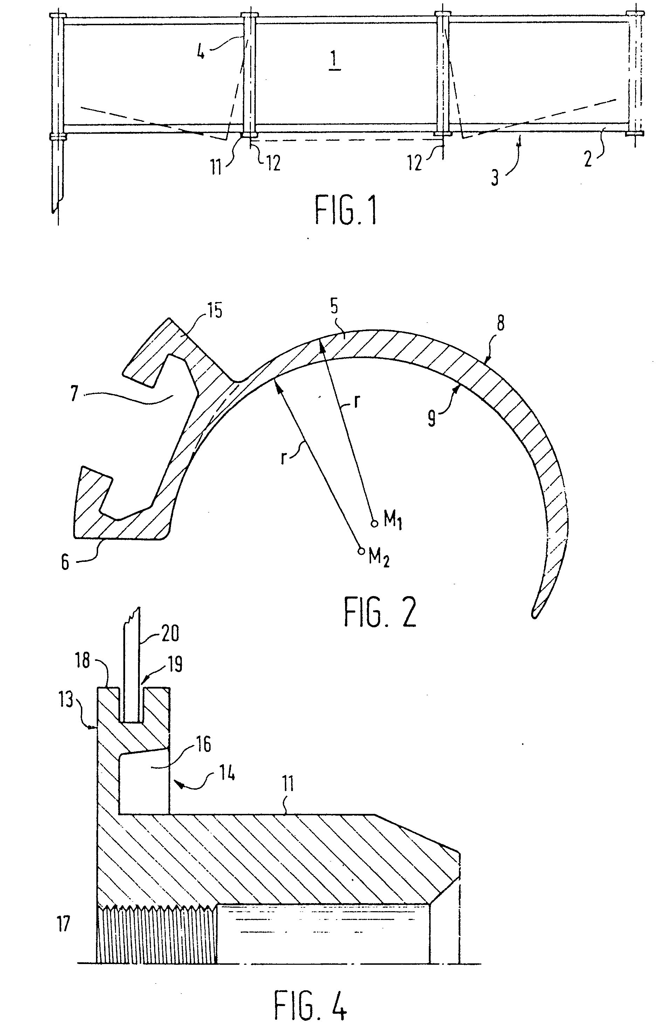

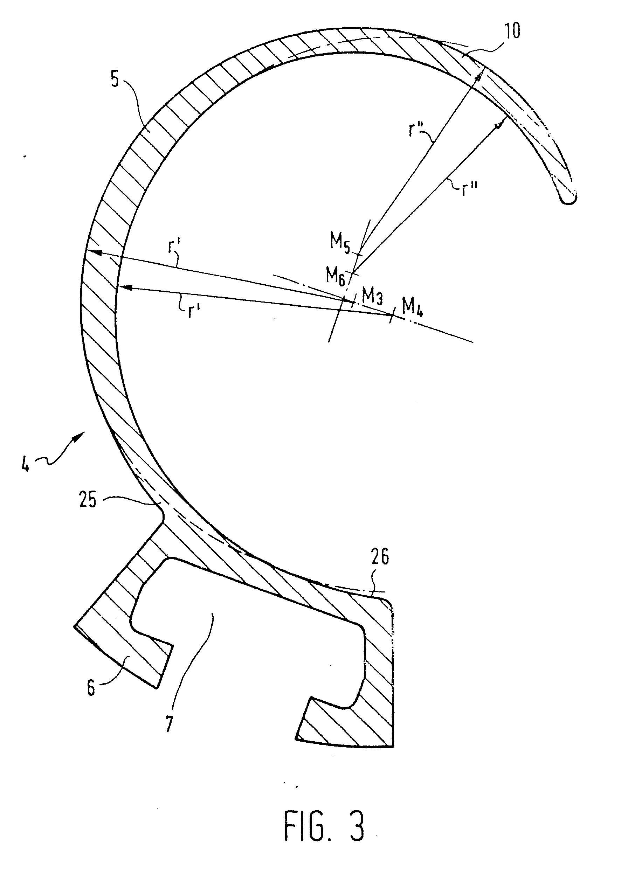

Die in Fig. 1 dargestellte Rasterdecke besteht aus einzelnen, etwa durch Kunststoffplatten 1, die im Bereich ihrer oberen und unteren Kanten in Zargen 2 eingreifen, gebildeten, als Ganzes mit 3 bezeichneten Flächenelementen, die im Bereich ihrer seitlichen Kanten aneinander festgelegt sind. Hierzu sind die Flächenelemente 3 im Bereich ihrer seitlichen Stosskanten mit Profilschienen 4 der in Fig. 2 oder 3 näher dargestellten Art versehen, die mit variablen Winkeln in gegenseitigen Eingriff bringbar sind.

Die Profilschienen 4 bestehen, wie die Fig. 2 und 3 am besten erkennen lassen, aus einem offenen Bogenprofilstück 5, an welches eine Halteleiste 6 angeformt ist. Zur Bildung einer Verbindung gattungsgemässer Art werden die aneinander festzulegenden Profilschienen 4 mit ihren Bogenprofilstücken 5 ineinandergesteckt. Hierdurch ergibt sich praktisch eine scharnierartige Verbindung, die variable Winkelstellungen ermöglicht.

Die Halteleiste 6 dient zur Halterung der Platten 1 bzw. der Zargen 2. Zur Ermöglichung einer formschlüssigen Festlegung ist die Halteleiste 6 mit einer hinterschnittenen Nut 7 versehen. Die Nut 7 dient dabei in der Regel zur Aufnahme eines mit einem Hammerkopf versehenen Spannelementes von in die Platten 1 bzw. die Zargen 2 in an sich bekannter Weise einsetzbaren, nicht näher dargestellten Spannschlössern. Die Aussenfläche 8 und die Innenfläche 9 des Bogenstücks 5 beschreiben jeweils einen exakten Kreisbogen mit jeweils gleichem Radius r; r'. Die Mittelpunkte $M_1$, $M_3$ bzw. $M_2$, $M_4$ dieser Kreisbögen sind dabei einfach um die dickste Wandstärke, in einer bevorzugten Ausführungsform etwa um 2,5 mm, gegeneinander versetzt. Die gegeneinander versetzten Kreisbögen bilden die Form einer kompletten Mondsichel, deren grösste Dicke in der Mitte liegt und deren Wandstärke hiervon ausgehend nach beiden Seiten abnimmt, was eine hohe Biegesteifigkeit ergibt.

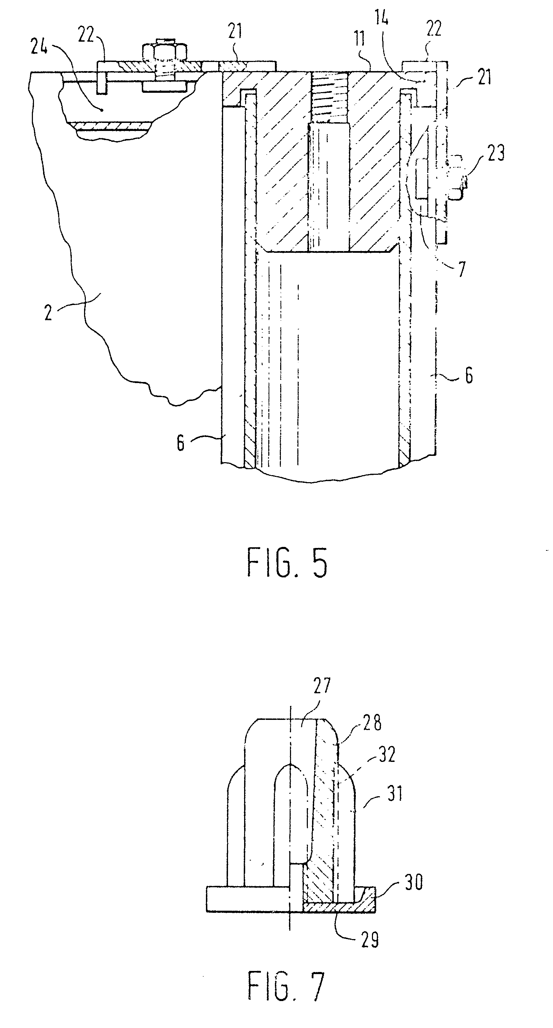

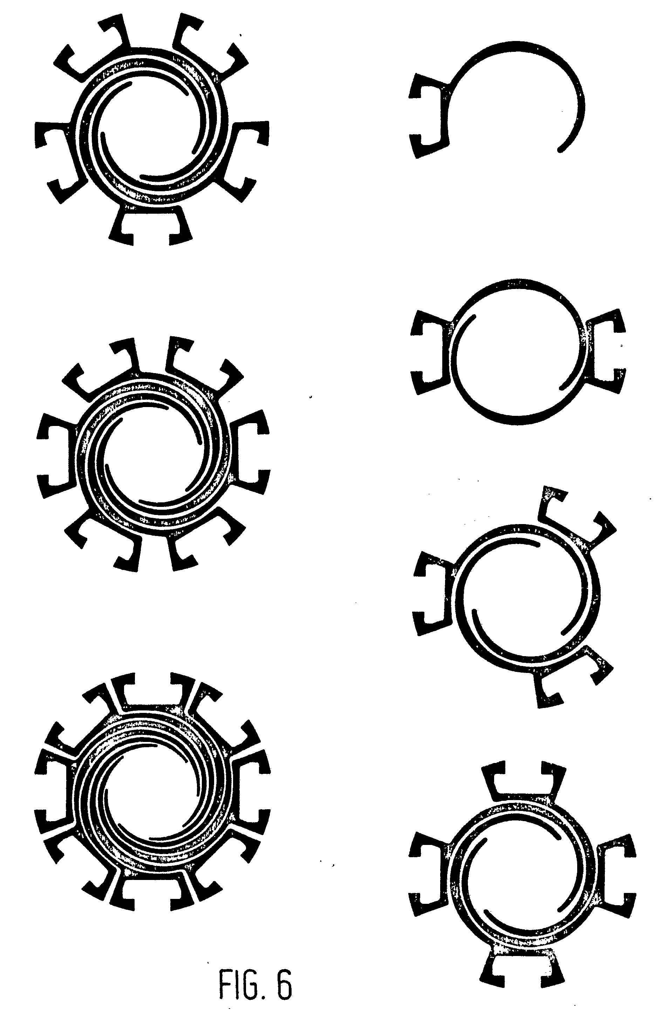

In dem der Halteleiste 6 gegenüberliegenden Bereich kann das Bogenprofilstück 5 da enden, wo der innere und der äussere Kreis sich schneiden, bzw. auf eine Wandstärke von etwa 1 mm aneinander angenähert sind. Da das mondsichelartige Bogenprofilstück 5 bei dem in der Fig. 2 dargestellten Ausführungsbeispiel in etwa nur einen Winkel von 180° umgreift, muss der zur Fixierung mehrerer ineinandergesteckter Profilstücke dienende Bolzen 11 eine Randklaue 14 aufweisen, wie dies in der Fig. 4 dargestellt ist. Diese Randklaue umgreift in der oben beschriebenen Weise den Rand der Profilschienen und verhindert damit, dass diese nach dem scharnierartigen Ineinanderschachteln bei Belastung auseinanderfallen können.

Bei dem in Fig. 3 dargestellten zweiten vorteilhaften Ausführungsbeispiel der Erfindung läuft das Bogenprofilstück 5 im Bereich seines freien Endes in einen dekorativen Bogenfortsatz 10 aus, dessen Kontur in die Kreisbögen der Innen- bzw. Aussenkante des Bogenprofilstückes 5 einlaufende Kreisbögen beschreibt, deren Radien r'' im dargestellten Ausführungsbeispiel leicht vom Radius r' abweichen.

Wie dies aus der Fig. 3 zu entnehmen ist, wird das Bogenprofilstück 5 durch den Bogenfortsatz 10, der ebenfalls durch zwei versetzte Kreisbögen mit dem gleichen Radius r'' begrenzt ist, über 180° hinaus verlängert, so dass ein eingesteckter Bolzen derart umfasst wird, dass mehrere ineinandergeschachtelte Profilstücke von einem glatten Bolzen fixierbar sind, der keine Randklaue aufweist. Der Bogenfortsatz 10 kann ferner dazu dienen, den optischen Eindruck der erfindungsgemässen Profilschiene 4 zu verbessern, wenn eine derartige Schiene in einem freien Rand eines Flächenelementes angeordnet ist.

Die Halteleiste 6 ist zweckmässig so angeordnet, dass ihre Mitte etwa im Bereich des Schnittpunkts der Kreisbögen mit dem Radius r liegt. Da somit in diesem Bereich genügend Fleisch zur Verfügung steht, kann der die innere Fläche 9 beschreibende Kreisbogen über diesen Schnittpunkt hinaus, im dargestellten Ausführungsbeispiel über die gesamte Breite der Halteleiste 6 geführt sein.

Aus der Fig. 3 ist ferner zu entnehmen, dass der Profilschienenquerschnitt im Anschlussbereich zur Halteleiste 6 an der Stelle 25 verstärkt ist, während die Halteleiste in etwa um den gleichen Betrag im Querschnitt an ihrer Innenseite im Bereich des Profilschienenendes an der Stelle 26 geschwächt ist. Dies ist deshalb erforderlich, damit mehrere Profilschienen 4 ineinandergesteckt werden können und sich die Profilschienen mit dem am Profilschienenende befindlichen Flansch der Halteleiste gegeneinanderschieben lassen.

Wenn mehrere Profilschienen dieser Art mit ihren Bogenprofilstücken 5 ineinandergesteckt sind, wie aus Fig. 6 erkennbar, kommen ersichtlich Wandungen mit genau gleicher Krümmung, nämlich die Aussenwandung 8 der einen mit der Innenwandung 9 der anderen Profilschiene in gegenseitige Anlage, so dass sich ein grossflächiger gegenseitiger Kontakt ergibt. Zur Fixierung der ineinandergesteckten Profilschienen dienen stirnseitig einzusteckende Bolzen 11, der in Fig. 4 ausführlich dargestellten Art oder Bolzen ohne Randklaue, je nachdem ob Profilschienen der in der Fig. 2 oder 3 dargestellten Art Verwendung finden.

Bei dem in Fig. 1 angedeuteten Ausführungsbeispiel liegen sich im Bereich jeder Stossstelle jeweils zwei stirnseitig angeordnete Bolzen 11 gegenüber, die durch hier lediglich durch ihre Mittellinien angedeutete Zuganker 12 miteinander verspannbar sind. Die Bolzen 11 bestehen aus drucksteifem Material und werden einfach in den von den ineinandergesteckten Bogenprofilstücken röhrenförmig umgrenzten Hohlraum eingelegt. Der Durchmesser der Bolzen 11 ist daher so zu dimensionieren, dass sich ein entsprechendes Schiebespiel ergibt.

Im dargestellten Ausführungsbeispiel nach den Fig. 1 und 2 ist der Bolzen 11 im Bereich einer Stirnseite mit einem Flansch 13 versehen, der zur Bildung einer Randklaue 14 im Bereich seines äusseren Randes abgekröpft ist. Die Randklaue 14 übergreift in der Montagestellung die benachbarten Stirnseiten der ineinandergesteckten Bogenprofilstücke 5 klammerartig. Dies ergibt nicht nur eine formschlüssige Sicherung des betreffenden Bolzens 11 gegen seitliches Herausfallen bei Verwendung kurzer Bogenprofilstücke, sondern bildet gleichzeitig eine klammerförmige Umfassung der ineinander eingreifenden Profilschienen 4, so dass auch beim Auftreten von Zugkräften ein Auseinanderklaffen verhindert wird, was sich insbesondere bei nicht abgestützten Stossstellen vorteilhaft auswirken kann.

Sofern mehrere Flächenelemente 3 eine Brücke etwa der in Fig. 1 dargestellten Art bilden, wobei lediglich am Rand eine Abstützung möglich ist, neigen die Flächenelemente 3 infolge des natürlichen Durchhangs zwischen den Abstützungen dazu, gegeneinander zu kippen wie in Fig. 1 mit unterbrochenen Linien angedeutet ist, so dass die Verbindungen im Bereich der Untergurte auf Zug beansprucht sind, was zu einem Auseinanderklaffen führen kann. Auf Grund des mit der erfindungsgemässen Randklaue 14 bewerkstelligten Formschlusses ist dies hier nicht möglich. Die seitlichen Schenkel 15 der Halteleiste 6 sind im Bereich der Stirnseiten zweckmässig entsprechend der Tiefe der durch die Randklaue 14 gebildeten Nut 16 abgeschliffen, wie in Fig. 5 angedeutet, aber nicht näher bezeichnet ist.

In der Fig. 7 ist ein weiteres bevorzugtes Ausführungsbeispiel des erfindungsgemässen Fixierbolzens 27 dargestellt. Wie ersichtlich ist, besteht der Fixierbolzen im wesentlichen aus dem Bolzenschaft 28 und dem Bolzenflansch 29, die mittels einer nichtdargestellten Verschraubung miteinander verbunden sind. Der Bolzenflansch 29 besitzt eine Randklaue 30. Der Bolzenschaft 28 weist einen im wesentlichen quaderförmigen Querschnitt auf, wobei seine Ecken doch abgerundete längliche Profilstücke 31 gebildet sind, welche in achsparallele, schwalbenschwanzförmige Aussparungen 32 des Bolzenschaftes 28 eingesetzt sind. Der Vorteil dieser Konstruktion besteht darin, dass der Bolzen nur mit seinen Eckprofilstücken 31 gegen die Innenfläche 9 der Bogenprofilstücke 5 anliegt, so dass die Reibkräfte dadurch verringert werden, was zu einer Erleichterung der Montage beiträgt. Da die Profilstücke 31 auswechselbar sind, können die gleichen Bolzenschäfte als Grundkörper für die Verbindung zweier oder mehrerer Profilschienen Verwendung finden, während einfach die Profilstücke gegen breitere oder schmälere Profilstücke ausgetauscht werden. Dadurch wird die Anpassbarkeit der Fixierbolzen an unterschiedliche Querschnitte verbessert, die sich dadurch ergeben, dass zwei oder mehrere Bogenprofilstücke 5 ineinandergeschachtelt werden.

Einander gegenüberliegende Bolzen 11 können, wie weiter oben bereits angedeutet, durch Zuganker 12 aneinander festgelegt sein. Hierzu können die Bolzen 11 mit einer Gewindebohrung 17 versehen sein. Die Zuganker 12 stellen sicher, dass die Bolzen 11 sauber in Stellung bleiben. In Fig. 4 ist eine weitere Möglichkeit zur Sicherung der Bolzen 11 angedeutet. Hierbei ist die radial äussere Wandung 18 der Randklaue 14 mit einer nach radial aussen offenen Umfangsnut 19 versehen, in welche eine einfach an einer benachbarten Zarge 2 od. dgl. festlegbare Haltelasche 20 eingreift. Eine Ausführungsform dieser Art erweist sich vor allem dann als zweckmässig, wenn bei einer Aufstockung von zwei übereinander anzuordnenden Profilschienen die einander zugewandten Bolzen 11 zur Bewerkstelligung einer gegenseitigen Sicherung miteinander verschraubt werden, wobei dann aber keine Möglichkeit zur Anbringung von Zugankern besteht.

Bei dem in Fig. 5 dargestellten Beispiel ist der Bolzen 11 einfach durch die Randklaue 14 übergreifende Riegel 21 gesichert. Eine derartige Ausführungsform bietet sich dann an, wenn die jeweils äussere Stirnseite des Bolzens 11 freiliegt. Der Riegel 21 besteht aus einer Lasche, die an einem Ende mit einer umgebogenen Nase 22 versehen ist, die in der Darstellung nach Fig. 5 rechts die Randklaue 14 übergreift. Hierbei kann der Riegel 21 mittels eines in die hinterschnittene Nut 7 einer Halteleiste 6 eingreifenden Spannelements 23 an dieser festgelegt sein, sofern diese frei ist. In der Darstellung nach Fig. 5 links ist der Riegel 21 an einer hier an einer Halteleiste 6 festgelegten Zarge 2 befestigt. Hierbei befindet sich einfach das der Nase 22 gegenüberliegende flache Laschenende im Eingriff mit dem Bolzen 11. Die Nase 22 kann dabei einfach in die hinterschnittene Nut 24 der Zarge 2 hineinragen. Zweckmässig ist die Nasenbreite daher auf die üblichen Nutquerschnitte abgestimmt.

Die Profilschienen 4 können zweckmässig als gezogene Aluminiumschienen ausgebildet sein. Zur Bildung der drucksteifen Bolzen kann ebenfalls Aluminium Verwendung finden. Die Bolzen können dabei entweder als Gussformlinge oder als ein- oder mehrteilige Drehteile ausgebildet sein.

Wie aus Fig. 6 am besten erkennbar ist, gewährleistet die erfindungsgemässe Ausgestaltung der Bogenprofilstücke 5 als geometrisch genaue Mondsicheln eine Ineinanderschachtelung einer praktisch beliebigen Zahl von Profilschienen. Eine Grenze setzt hierbei lediglich die Breite der Halteleisten 6. Da hierbei in jedem Fall jeweils Kreise mit gleichem Radius aneinander anliegen, ist ersichtlich auch eine leichte Winkelveränderung möglich.

Bezugszeichenliste zu P 3507
1 Kunststoffplatten
2 Zargen
3 Flächenelemente
4 Profilschienen
5 Bogenprofilstück
6 Halteleiste
7 Nut
8 Aussenfläche
9 Innenfläche
10 Bogenfortsatz
11 Bolzen
12 Zuganker
13 Flansch
14 Randklaue
15 Schenkel
16 Nut
17 Gewindebohrung
18 äussere Wandung
19 Umfangsnut
20 Haltelasche
21 Riegel
22 Nase
23 Spannelement
24 Nut
25 Querschnittsverstärkung
26 Querschnittsschwächung
27 Fixierbolzen
28 Bolzenschaft
29 Bolzenflansch
30 Randklaue
31 Profilstück
32 Aussparung

**Patentansprüche**

1. Verbindungsvorrichtung für mit variablen Winkeln aneinander festlegbare Flächenkonstruktionselemente (3), insbesondere Wand- und/oder Deckenelemente, Zargen od. dgl., mit an den Stosskanten der Flächenkonstruktionselemente (3) jeweils festlegbaren Profilschienen (4), die jeweils ein offenes, im Querschnitt bogenförmiges Profilstück (5) aufweisen und hiermit in gegenseitigen Eingriff bringbar sind, wobei mehrere derart ineinandergesteckte Profilschienen (4) durch stirnseitig einlegbare Bolzen (11) fixierbar sind, dadurch gekennzeichnet, dass

a) die bogenförmigen Profilstücke (5) im Querschnitt sichelartig durch zwei gegeneinander versetzte Kreisbögen, die gleichen Radius aufweisen, begrenzt sind, und

b) die zur Fixierung jeweils vorgesehenen Bolzen (11) drucksteif ausgebildet und an einem Ende mit einer die benachbarten Stirnseiten der ineinandergesteckten bogenförmigen Profilstücke (5) übergreifenden Randklaue (14) versehen sind.

2. Verbindungsvorrichtung für mit variablen Winkeln aneinander festlegbare Flächenkonstruktionselemente (3), insbesondere Wand-. und/oder Deckenelemente, Zargen od.dgl., mit an den Stosskanten der Flächenkonstruktionselemente (3) jeweils festlegbaren Profilschienen (4), die jeweils ein offenes, im Querschnitt bogenförmiges Profilstück (5) aufweisen und hiermit in gegenseitigen Eingriff bringbar sind, wobei mehrere derart ineinandergesteckte Profilschienen (4) durch stirnseitig einlegbare Bolzen (11) fixierbar sind, dadurch gekennzeichnet, dass

a) die bogenförmigen Profilstücke (5) im Querschnitt sichelartig durch zwei gegeneinander versetzte Kreisbögen, die gleichen Radius aufweisen, begrenzt sind, und an wenigstens einem Ende durch einen dekorativen Bogenfortsatz (10) so verlängert sind, dass sie einen grösseren Winkel als 180° umschliessen, und

b) die zur Fixierung jeweils vorgesehenen Bolzen (11) drucksteif ausgebildet sind.

3. Vorrichtung nach Anspruch 2, dadurch gekennzeichnet, dass der Bogenfortsatz (10) von einem Profilstück gebildet ist, welches durch zwei gegeneinander versetzte Kreisbögen, die gleichen Radius aufweisen, begrenzt ist.

4. Vorrichtung nach Anspruch 2 oder 3, dadurch gekennzeichnet, dass die den Bogenfortsatz (10) begrenzenden Radien kleiner als die das Profilstück (5) begrenzenden Radien sind und dass die Konturlinien des Profilschienenquerschnittes gleichmässig ineinander übergehen.

5. Vorrichtung nach einem der Ansprüche 2 bis 4, dadurch gekennzeichnet, dass die Mittelpunkte der den Bogenfortsatz (10) begrenzenden Kreisbögen auf einer Normalen zu der durch die Mittelpunkte der das Profilstück (5) begrenzenden Kreisbögen gelegten Mittelachse zueinander versetzt sind.

6. Vorrichtung nach einem der Ansprüche 1 bis 5, dadurch gekennzeichnet, dass der Querschnitt der Profilschiene (4) oder des Profilstückes (5) von einer Sichel gebildet ist, deren grösste Dicke im Bereich der Mitte des Profilstücks liegt und deren Wandstärke hiervon ausgehend nach beiden Seiten abnimmt.

7: Vorrichtung nach einem der Ansprüche 1 bis 6, dadurch gekennzeichnet, dass das bogenförmige Profilstück (5) mit einem dünnen Ende der Sichel an eine wenigstens mit einer hinterschnittenen Nut (7) versehene Halteleiste (6) angeformt ist.

8. Vorrichtung nach Anspruch 7, dadurch gekennzeichnet, dass das Sichelende des Profilstücks (5) im Anschlussbereich zur Halteleiste (6) im Querschnitt an der Aussenseite verstärkt ist und dass die Halteleiste um den gleichen Betrag im Querschnitt an ihrer Innenseite im Bereich des Profilschienenendes geschwächt ist.

9. Vorrichtung nach einem der Ansprüche 7 oder 8, dadurch gekennzeichnet, dass die Halteleiste (6) im Bereich der Enden der Profilschienen gegenüber dem zugehörigen bogenförmigen Profilstück (5) zumindest um die Eingriffstiefe der Randklaue (14) verkürzt ist.

10. Vorrichtung nach einem der Ansprüche 1 bis 9, dadurch gekennzeichnet, dass der Bolzenschaft (28) einen quaderförmigen Querschnitt aufweist.

11. Vorrichtung nach Anspruch 10, dadurch gekennzeichnet, dass die Ecken des quaderförmigen Bolzenschaftes von abgerundeten, länglichen Profilstücken (31) gebildet sind, die in schwalbenschwanzförmigen Aussparungen (32) des Schaftmantels gehalten sind.

12. Vorrichtung nach einem der Ansprüche 1 bis 11, dadurch gekennzeichnet, dass der Bolzen (11) eine nach radial aussen offene Umfangsnut (19) aufweist, in welche eine halteleisten- oder flächenkonstruktionselementseitig festlegbare Haltelasche (20) einsteckbar ist.

13. Vorrichtung nach Anspruch 12, dadurch gekennzeichnet, dass die Umfangsnut (19) in der radial äusseren Wandung (18) der Randklaue (14) angeordnet ist.

**Claims**

1. Connecting device for planar-construction elements (3) joinable together at adjustable angles, in particular for making up walls and/or screens, casings and the like, having a number of profile rails (4) which are designed to be fixed at the edges of the planar-construction elements (3), each profile rail having an open profile piece (5) curve-shaped in cross-section and being adapted to be engageably nested inside each other, where several profile rails (4) nested within one another are adapted to be locked by bolts (11) insertable at the endfaces of the profile rails, characterized in that

a) the curve-shaped profile pieces (5) are in cross-section crescent-shaped bordered by two spaced circular arcs of equal radius, and

b) the bolts (11), each provided for the locking action are non-deformable by pressure and are provided, at one end thereof, by an endclaw (14) gripping over the adjacent endfaces of the curve-shaped profile pieces (5) nested within each other.

2. Connecting device for planar-construction elements (3) joinable together at adjustable angles, in particular for making up walls and/or screens, casings and the like, having a number of profile rails (4) which are designed to be fixed at the edges of the planar-construction elements (3), each profile rail having an open profilepieces (5) curve-shaped in cross-section and being adapted to be engageably nested inside each other, where several profile rails (4) nested within one another are adapted to be locked by bolts (11) insertable at the endfaces of the profile rails, characterized in that

a) the curve-shaped profile pieces (5) are in cross-section crescent-shaped bordered by two spaced circular arcs of equal radius, and being extended by a decorative curve-shaped extension (10) at least one end thereof so that they enclose an angle larger than 180°, and

b) the bolts (11) each provided for the locking action are formed non-deformable by pressure.

3. Device according to claim 2, characterized in that the curve-shaped extension (10) is formed by a profile portion which is bordered by two spaced circular arcs with the same radius.

4. Device according to claim 2 or 3, characterized in that the radii bordering the curve-shaped extension (10), are smaller than the radii bordering the profile piece (5), and that the lines of the outside contour of the section of the profile rails are smoothely joined with each other.

5. Device according to one of the claims 1 to 4, characterized in that the center points of the arcs bordering the curve-shaped extensions (10) are spaced apart on a line which is normal to the middle axis running through the center points of the arcs bordering the profile piece (5).

6. Device according to one of the claims 1 to 5, characterized in that the section of the profile rail (4) or the profile piece (5) is formed by a crescent the largest thickness of which is in the region of the middle of the profile piece and the wall thickness of which is decreasing to each side starting therefrom.

7. Device according to one of the claims 1 to 6, characterized in that the curve-shaped profile piece (5) is formed integrally with one of its thin ends of the crescent to a locking rail (6) provided at least with an undercut groove (7).

8. Device according to claim 7, characterized in that the end of the crescent of the profile piece (5) is thicker in cross-section on the outside in the area where it is joined to the locking rail (6), and that the locking rail is made thinner by the same amount in cross-section on its inner side near to the end of the profile rail.

9. Device according to one of the claims 7 or 8, characterized in that the locking rail (6), near the ends of the profile rail, is cut shorter than the corresponding curve-shaped profile piece (5) at least by the depth of engagement of the endclaw (14).

10. Device according to one of the claims 1 to 9, characterized in that the bolt-shaft (28) has a block-like rectangular cross-section.

11. Device according to claim 10, characterized in that the corners of the block-like bolt-shaft are formed by rounded-off alongated profile pieces (31) locked in dovetail-like grooves (32) of the outer face of the bolt-shaft.

12. Device according to one of the claims 1 to 11, characterized in that the bolt (11) has circumferential groove (19) open radially to the outside in which groove a fixing ledge (20) is adapted to be inserted which ledge may be fixed to the locking rails or to the planar-construction elements on the sides thereof.

13. Device according to claim 23, characterized in that the circumferential groove (19) is arranged in the radially outer wall (18) of the endclaw (14).

**Revendications**

1. Système de fixation pour éléments de constructions planes (3) fixables entre eux avec des angles variables, en particulier pour éléments muraux et/ou de plafond, les châssis ou éléments analogues, avec des rails profilés (4) fixables situés aux bords des éléments de constructions planes (3), rails qui présentent une pièce profilée (5) ouverte de section cintrée qui permet leur engrènement mutuel, plusieurs rails profilés (4) engrénés de telle sorte pouvant être fixés par des chevilles (11) que l'on peut monter sur la face avant, caractérisé en ce que

a) les pièces profilées (5) cintrées de section en forme de croissant sont limitées par deux arcs de cercle de même rayon et décalés l'un par rapport à l'autre et que

b) les chevilles (11) prévues pour la fixation sont résistantes à la pression et présentent à une de leurs extrémités une griffe marginale (14) qui chevauche les faces avant voisines des pièces profilées (5) de forme cintrée et engrénées entre-elles.

2. Système de fixation pour éléments de constructions planes (3) fixables entre eux avec des angles variables, en particulier pour éléments muraux et/ou de plafond, les châssis ou éléments analogues, avec des rails profilés (4) fixables situés aux bords des éléments de constructions planes (3), rails qui présentent une pièce profilée (5) ouverte de section cintrée qui permet leur engrènement mutuel, plusieurs rails profilés (4) engrénés de telle sorte pouvant être fixés par des chevilles (11) que l'on peut monter sur la face avant, caractérisé en ce que

a) les pièces profilées (5) cintrées de section en forme de croissant sont limitées par deux arcs de cercle de même rayon et décalés l'un par rapport à l'autre et sont continuées à une extrémité au moins par un prolongement cintré (10) de manière à entourer un angle supérieur à 180° et que

b) les chevilles (11) prévues pour la fixation sont résistantes à la pression.

3. Système selon la revendication 2, caractérisé en ce que le prolongement cintré (10) est formé par une pièce profilée laquelle est limitée par deux arcs de cercle de même rayon et décalés l'un par rapport à l'autre.

4. Système selon la revendication 2 ou 3, caractérisé en ce que les rayons limitant le prolongement cintré (10) sont plus petits que ceux limitant la pièce profilée (5) et que les lignes de contour de la section du rail profilé s'unissent régulièrement l'une à l'autre.

5. Système selon l'une des revendications 2 à 4, caractérisé en ce que les centres des arcs de cercle limitant le prolongement cintré (10) sont décalés l'un par rapport à l'autre sur une normale à la ligne médiane que forment les centres des arcs de cercle limitant la pièce profilée (5).

6. Système selon l'une des revendications 1 à 5, caractérisé en ce que la section des rails profilés (4) ou de la pièce profilée (5) a la forme d'un croissant dont la plus grande épaisseur se situe dans la zone du centre de la pièce profilée et dont les parois vont en s'amincissant à partir de cette zone en direction des deux côtés.

7. Système selon l'une des revendications 1 à 6, caractérisé en ce qu'à l'une des extrémités minces du croissant la pièce profilée cintrée (5) prend la forme d'une bordure de retenue (6) présentant au moins une rainure (7) coupée à l'arrière.

8. Système selon la revendication 7, caractérisé en ce que l'extrémité du croissant de la pièce profilée (5) est renforcée dans sa section du côté extérieur dans la zone de liaison de la bordure de retenue (6) et que la bordure de retenue est amincie dans sa section de la même quantité de son côté intérieur dans la zone de l'extrémité du rail profilé.

9. Système selon une des revendications 7 ou 8, caractérisé en ce que la bordure de retenue (6) est racourcie dans la zone des extrémités des rails profilés par rapport à la pièce profilée (5) cintrée correspondante d'au moins la profondeur d'engrènement de la griffe marginale (14).

10. Système selon l'une des revendications 1 à 9, caractérisé en ce que la section de la tige de la cheville (28) est rectangulaire.

11. Système selon la revendication 10, caractérisé en ce que les angles de la tige rectangulaire de la cheville sont formés par des pièces profilées (31) arrondies et allongées qui sont maintenues dans des évidements (32) en queue d'aronde de la chemise de la tige.

12. Système selon l'une des revendications 1 à 11, caractérisé en ce que la cheville (11) présente une rainure circonférentielle (19) ouverte vers l'extérieur dans laquelle on peut fixer une languette de retenue (20) que l'on peut placer du côté de la bordure de retenue ou de l'élément de constructions planes.

13. Système selon la revendication 12, caractérisé en ce que la rainure circonférentielle (19) est placée dans la paroi (18) extérieure de la griffe marginale (14).

FIG. 1

FIG. 2

FIG. 4

FIG. 3

FIG. 5

FIG. 7

13

FIG. 6